# EUROPÄISCHE PATENTANMELDUNG

(11) **EP 1 107 094 A2**
(43) Veröffentlichungstag der Anmeldung: **13.06.2001**
(21) Anmeldenummer: 00126676.6
(22) Anmeldetag: 05.12.2000
(51) Int. Cl.: G06F 1/26

(54) **Stromversorgungsschaltung für ein batteriebetriebenes Mikrocomputergerät**

(30) Priorität: 08.12.1999 DE 19959027
(71) Anmelder: Merten GmbH & Co. KG, 51674 Wiehl (DE)
(72) Erfinder: Hermann, Bernd-Peter, 51645 Gummersbach (DE); Kuhnert, Jürgen, 51702 Bergneustadt (DE)
(74) Vertreter: Selting, Günther, Dipl.-Ing.

(57) **Zusammenfassung**

Die Stromversorgungsschaltung dient zur Versorgung eines Mikrocomputers, der einen eine höhere Betriebsspannung benötigenden Betriebszustand und einen eine niedrigere Haltespannung benötigenden Haltezustand zur Aufrechterhaltung gespeicherter Daten annehmen kann. Dem Versorgungsanschluß (12) des Mikrocomputers ist ein Energiespeicher (18) parallelgeschaltet. Der Energiespeicher wird über einen spannungsgesteuerten Schalter (17) vorübergehend aufgeladen, wenn die Spannung am Versorgungsanschluß (12) unter einen Grenzwert absinkt, der etwas höher liegt als die Haltespannung des Mikrocomputers. Die Aufladung des Energiespeichers (18) erfolgt bei geschlossenem Schalter (17) durch einen Gleichspannungswandler (14) oder eine andere Energiequelle. Die Erfindung ermöglicht es, Batterien auch dann noch zu benutzen, wenn die Batteriespannung unter die Haltespannung des Mikrocomputers abgesunken ist. Somit wird der Batteriewechselzyklus verlängert.

## Beschreibung

Die Erfindung betrifft eine Stromversorgungsschaltung für ein batteriebetriebenes Gerät, das einen Mikrocomputer enthält, welcher einen eine höhere Betriebsspannung benötigenden Betriebszustand und einen eine niedrigere Haltespannung benötigenden Haltezustand annehmen kann.

Bei elektronischen Geräten mit Batterieversorgung sollte der Stromverbrauch möglichst gering sein, um eine lange Lebensdauer der Batterie zu erreichen. Es ist bekannt, einen Mikrocomputer in einen Haltezustand zu versetzen, in dem er eine für den Datenerhalt ausreichende niedrige Spannung benötigt, wenn der Computer keine aktiven Tätigkeiten ausführen muß. Im abgeschalteten Zustand würde ein Mikrocomputer normalerweise seine Daten verlieren. Aus diesem Grund wird er nicht völlig abgeschaltet, sondern in einen Standby-Modus oder Haltezustand versetzt. In diesem Zustand arbeitet der Mikrocomputer zwar nicht, jedoch werden die Daten erhalten, solange eine ausreichend hohe Haltespannung (Data Retention Voltage) anliegt. Diese Spannung liegt unter der normalen Betriebsspannung des Mikrocomputers.

Eine weitere Besonderheit batteriebetriebener Geräte besteht darin, dass infolge einer vorgegebenen geringen Baugröße häufig nur Batterien eingesetzt werden können, die eine relativ geringe Batteriespannung liefern. In solchen Fällen wird ein Gleichspannungswandler benutzt, der aus der relativ niedrigen Batteriespannung eine relativ hohe Betriebsspannung erzeugt. Gleichspannungswandler haben jedoch auch Energieverluste, so dass sie abgeschaltet werden sollten, wenn keine Aktion des Mikrocomputers erforderlich ist.

Es gibt batterieversorgte Geräte, wie beispielsweise Sendegeräte oder Empfangsgeräte, die über längere Zeit niedrigen Außentemperaturen ausgesetzt sein können. Bei niedrigen Temperaturen sinkt die Batteriespannung, insbesondere bei nur teilweise aufgeladener Batterie, erheblich ab. Wenn die Batteriespannung bei solchen ungünstigen Verhältnissen unter die Haltespannung des Mikrocomputers zu sinken droht, muß die Batterie ausgewechselt werden, obwohl sie noch über eine gewisse Energiemenge verfügt. Wird in diesem Fall der Gleichspannungswandler eingeschaltet, um die Batteriespannung in eine höhere Betriebsspannung umzusetzen, dann findet durch den zusätzlichen Energieverbrauch des Gleichspannungswandlers eine noch schnellere Entladung der Batterie statt. Die Folge ist, dass Batterien wegen des Nachlassens der Batteriespannung nur teilweise verbraucht werden können und dass die Einsatzdauer einer Batterie relativ kurz sein kann.

Der Erfindung liegt die Aufgabe zugrunde, eine Stromversorgungsschaltung zu schaffen, die bei geringer Batteriespannung einen Datenerhalt im Haltezustand des Mikrocomputers bei niedrigem Stromverbrauch sicherstellt.

Die Lösung dieser Aufgabe erfolgt erfindungsgemäß mit den im Patentanspruch 1 angegebenen Merkmalen. Hiernach ist der Mikrocomputer mit einem Energiespeicher verbunden, welcher durch einen von der Batterie gespeisten Gleichspannungswandler oder eine andere Spannungsquelle aufladbar ist, wenn seine Spannung auf einen nahe der Haltespannung des Mikrocomputers liegenden Grenzwert absinkt. Dies bedeutet, dass der Mikrocomputer, der im Haltezustand einen äußerst niedrigen Stromverbrauch hat, von einem Energiespeicher versorgt wird, der intermittierend von dem Gleichspannungswandler oder einer anderen Spannungsquelle aufgeladen wird. Das Aufladen des Energiespeichers erfolgt nicht kontinuierlich, sondern nur dann, wenn die Spannung auf den Grenzwert absinkt und unter die Haltespannung des Mikrocomputers zu sinken droht. Im Haltezustand wird die Spannungsversorgung des Mikrocomputers dem Energiespeicher überlassen und dieser wird nur dann, wenn seine Spannung auf den Grenzwert abgesunken ist, wieder aufgeladen. Ein wesentlicher Vorteil besteht darin, dass der Haltezustand des Mikrocomputers auch im Falle einer sehr geringen Batteriespannung aufrechterhalten werden kann, ohne die Batterie wesentlich zu belasten.

Unter einer Batterie werden im Rahmen der vorliegenden Erfindung nicht nur Einwegbatterien verstanden, sondern auch Akkumulatoren als wiederaufladbare Batterien. Bei wiederaufladbaren Batterien besteht der Vorteil längerer Intervalle zwischen den Aufladevorgängen.

Bei einer bevorzugten Ausführungsform der Erfindung ist ein Gleichspannungswandler vorgesehen, der über einen spannungsgesteuerten Schalter mit dem Energiespeicher verbunden ist. Der spannungsgesteuerte Schalter wird von einer Spannungsüberwachungsschaltung gesteuert, die die Versorgungsspannung des Mikrocomputers überwacht. Zweckmäßigerweise wird durch die Spannungsüberwachung der Gleichspannungswandler abgeschaltet, wenn der Schalter in den nichtleitenden Zustand geschaltet ist. Dadurch wird die Batterie wenig belastet. Der Gleichspannungswandler wird nur dann eingeschaltet, wenn der Schalter geschlossen ist, um den Energiespeicher aufzuladen. Der Energiespeicher wird also in relativ kurzen Aufladevorgängen von Zeit zu Zeit aufgeladen, um dann die Haltespannung für den Datenerhalt des Mikrocomputers über längere Zeit zur Verfügung zu stellen. Bei einem auf diese Weise in Intervallen betriebenen Gleichspannungswandler kann der Mikrocomputer auch dann, wenn die Batteriespannung auf einen sehr niedrigen Wert absinkt, noch im Haltezustand betrieben werden, weil die Batteriespannung durch den Gleichspannungswandler hochgesetzt wird. Es ist damit möglich, eine Batterie äußerst weitgehend zu entladen und den Batteriewechselzyklus zu verlängern.

Gemäß einer bevorzugten Weiterbildung der Erfindung erfolgt bei hohem Ladezustand der Batterie eine direkte Aufladung des Energiespeichers durch die Batterie, also ohne Betätigung des Gleichspannungswandlers. Nur wenn die Batteriespannung nicht ausreicht, um den Energiespeicher auf die Haltespannung aufzuladen, wird der Gleichspannungswandler eingeschaltet. Hierdurch wird ein unnötiger Betrieb des Gleichspannungswandlers im Falle einer genügend hohen Batteriespannung vermieden.

Im folgenden werden unter Bezugnahme auf die Zeichnungen Ausführungsbeispiele der Erfindung näher erläutert.

Es zeigen:
- Fig. 1: ein Blockschaltbild einer Stromversorgungsschaltung für ein batteriebetriebenes Gerät mit Mikrocomputer und
- Fig. 2: eine Weiterbildung der Stromversorgungsschaltung nach Fig. 1.

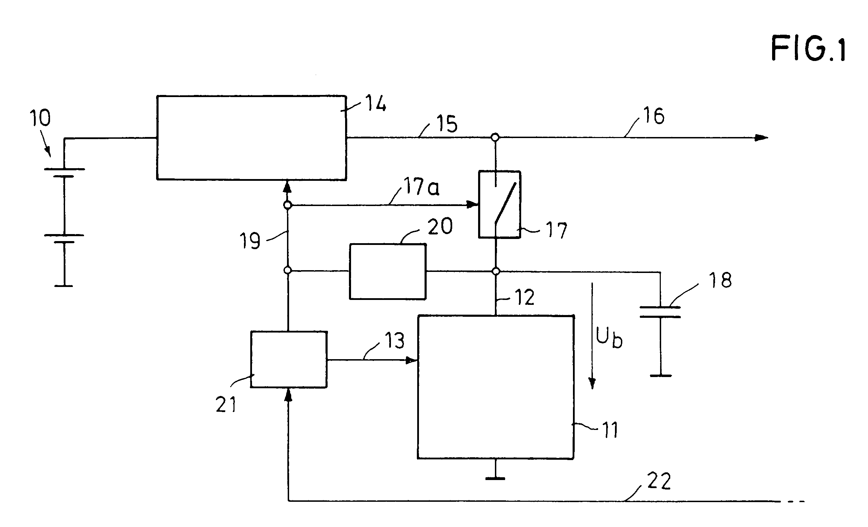

Die Stromversorgungsschaltung von Fig. 1 weist eine Batterie 10 auf, die ein elektrisches Gerät versorgt, wozu u.a. auch ein Mikrocomputer 11 gehört. Die Datenanschlüsse des Mikrocomputers 11 sind nicht dargestellt. Der Mikrocomputer weist einen Versorgungsanschluß 12 zum Anlegen der Versorgungsspannung und einen Aufweckeingang 13 auf. Der Mikrocomputer 11 ist derart ausgebildet, dass er bei Nichtbetrieb in einen Haltezustand versetzt wird, in welchem zum Datenerhalt eine geringere Versorgungsspannung, die Haltespannung, am Versorgungsanschluß 12 benötigt wird.

Die Stromversorgung des Mikrocomputers erfolgt über einen Gleichspannungswandler 14, der aus einer relativ niedrigen Batteriespannung eine höhere Gleichspannung an Leitung 15 erzeugt. Diese Gleichspannung wird einerseits über eine Leitung 16 anderen Komponenten des Gerätes zur Stromversorgung zugeführt und andererseits über einen Schalter 17 an den Anschluß 12 des Mikrocomputers gelegt. Der Anschluß 12 ist mit einem Energiespeicher 18 verbunden, bei dem es sich um einen Speicherkondensator großer Kapazität handelt. Der Speicherkondensator dient als Spannungsversorgung für den Mikrocomputer im Haltezustand, wenn der Schalter 17 im Sperrzustand ist. Der Schalter 17 ist in der Praxis ein elektronischer Schalter, z.B. ein FET-Transistor, ein Bipolar-Transistor oder ein ähnliches Schaltelement. Als Schalter kann auch eine Diode benutzt werden, die durch eine angelegte Vorspannung gesteuert wird.

Der Steueranschluß 17a des Schalters 17 ist über eine Leitung 19 mit einer Spannungsüberwachungsschaltung 20 verbunden, welche die Versorgungsspannung des Mikrocomputers am Versorgungsanschluß 12 überwacht. Die Spannungsüberwachungsschaltung 20 erzeugt ein Signal, wenn die Spannung am Versorgungsanschluß 12 auf einen Grenzwert absinkt, der geringfügig oberhalb der Haltespannung des Mikrocomputers 11 liegt. Wenn dieser Grenzwert erreicht wird, wird der Schalter 17 in den leitenden Zustand gesteuert. Gleichzeitig wird über Leitung 19 der Gleichspannungswandler 14 eingeschaltet, so dass der Energiespeicher 18 auf eine relativ hohe Spannung aufgeladen wird. Das Abschalten des Gleichspannungswandlers 14 und das Steuern des Schalters 17 in den nichtleitenden Zustand erfolgt entweder nach Ablauf einer vorbestimmten Zeitspanne oder nach Erreichen einer vorgegebenen Spannung am Energiespeicher 18.

Die Stromversorgungsschaltung weist ferner eine Aufwecklogik 21 auf, welche auf ein Signal an der Aufweckleitung 22 hin über Leitung 19 den Gleichspannungswandler 14 einschaltet und über den Steueranschluß 17a den Schalter 17 in den leitenden Zustand steuert. Auf diese Weise kann der Mikrocomputer in den Betriebszustand versetzt werden, wenn die Betriebsspannung erreicht ist, die höher ist als die Haltespannung.

Im Haltezustand wird der Energiespeicher 18 in Abhängigkeit von der Größe der am Versorgungsanschluß 12 anstehenden Versorgungsspannung kurzzeitig aufgeladen und der Gleichspannungswandler 14 wird nur während der Aufladezeiten eingeschaltet.

Alternativ kann anstelle des Energiespeichers 18 auch eine andere Spannungsquelle für den Haltebetrieb benutzt werden, beispielsweise eine wiederaufladbare Stützbatterie.

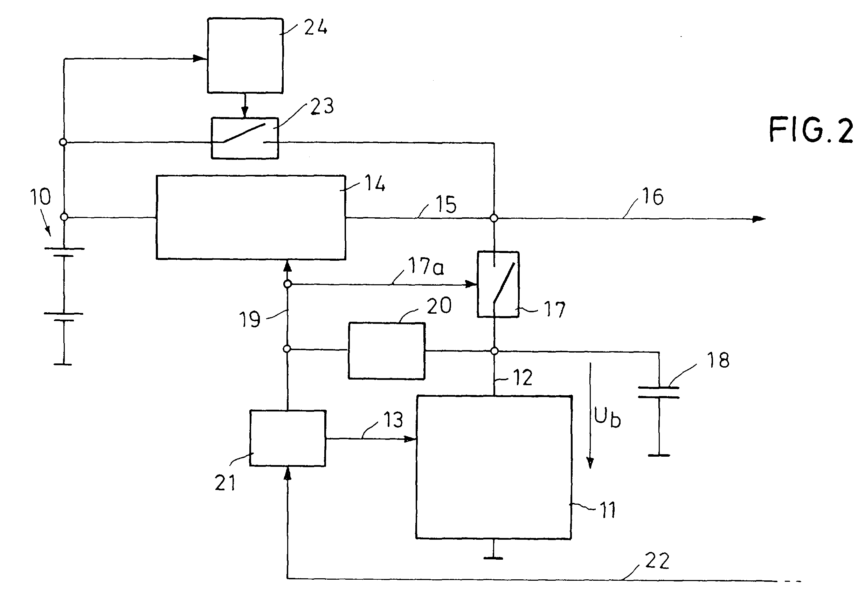

Das Ausführungsbeispiel von Fig. 2 entspricht demjenigen von Fig. 1 und enthält zusätzlich einen Überbrückungsschalter 23, der den Gleichspannungswandler 14 überbrückt, d.h. mit dem Eingang und mit dem Ausgang des Gleichspannungswandlers verbunden ist. Gesteuert wird der Überbrückungsschalter von einer Spannungsüberwachungsschaltung 24 in Abhängigkeit von der Spannung der Batterie 10. Wenn die Batteriespannung größer ist als die vom Mikrocomputer 11 benötigte Haltespannung, wird der Überbrückungsschalter 23 in den leitenden Zustand geschaltet. Gleichzeitig wird der Gleichspannungswandler 14 abgeschaltet. Der Energiespeicher 18 wird dann über den Schalter 17 mit der Batteriespannung aufgeladen.

Wenn der Mikrocomputer 11 im aktiven Zustand ist und die höhere Betriebsspannung benötigt, wird der Überbrückungsschalter 23 in den nichtleitenden Zustand geschaltet und der Gleichspannungswandler 14 wird eingeschaltet, so dass an der Leitung 15 die höhere Betriebsspannung steht, die über den leitend geschalteten Schalter 17 dem Versorgungsanschluß 12 zugeführt wird.

Hiermit wird erreicht, dass bei einer für den Datenerhalt ausreichenden Batteriespannung die Versorgung des Mikrocomputers direkt aus der Batterie 10 erfolgt. In diesem Fall bleibt der Schalter 17 auch im Haltezustand des Mikrocomputers geschlossen. Zusätzlich ist der Überbrückungsschalter 23 geschlossen. Das zyklische Nachladen des Energiespeichers 18 entfällt in diesem Fall und die Verluste im Gleichspannungswandler 14 fallen nicht an.

Beispielsweise beträgt die Betriebsspannung, bei der der Mikrocomputer arbeitsfähig ist, 5 V und die Haltespannung, die zum Datenerhalt erforderlich ist, beträgt 2,5 V. Die Spannung der Batterie 10 beträgt im aufgeladenen Zustand 3 V und sinkt während der Lebensdauer der Batterie sowie bei Kälte auf einen Wert unter 2,5 V ab.

## Patentansprüche

1. Stromversorgungsschaltung für ein batteriebetriebenes Gerät, das einen Mikrocomputer (11) enthält, welcher einen eine höhere Betriebsspannung benötigenden Betriebszustand und einen eine niedrigere Haltespannung benötigenden Haltezustand annehmen kann,
**dadurch gekennzeichnet**,
dass der Mikrocomputer (11) mit einem Energiespeicher (18) verbunden ist, welcher durch einen von der Batterie (10) gespeisten Gleichspannungswandler (14) oder eine andere Spannungsquelle aufladbar ist, wenn seine Spannung auf einen nahe der Haltespannung des Computers liegenden Grenzwert absinkt.

2. Stromversorgungsschaltung nach Anspruch 1, dadurch gekennzeichnet, dass ein Gleichspannungswandler (14) vorgesehen ist, der über einen spannungsgesteuerten Schalter (17) mit dem Energiespeicher (18) verbunden ist.

3. Stromversorgungsschaltung nach Anspruch 2, dadurch gekennzeichnet, dass der spannungsgesteuerte Schalter (17) und der Gleichspannungswandler (14) von einer die Versorgungsspannung des Mikrocomputers (11) überwachenden Spannungsüberwachungsschaltung (20) gesteuert sind.

4. Stromversorgungsschaltung nach Anspruch 2 oder 3, dadurch gekennzeichnet, dass der Gleichspannungswandler (14) abgeschaltet wird, wenn seit dem Einschalten eine vorgegebene Zeit verstrichen ist, oder wenn die Spannung des Energiespeichers (18) einen vorbestimmten oberen Wert erreicht.

5. Stromversorgungsschaltung nach einem der Ansprüche 2-4, dadurch gekennzeichnet, dass der Gleichspannungswandler (14) durch einen Überbrückungsschalter (23) überbrückt ist, welcher im Haltezustand des Mikrocomputers (11) bei einer für den Datenerhalt des Mikrocomputers ausreichenden Batteriespannung leitend gesteuert ist.

6. Stromversorgungsschaltung nach Anspruch 5, dadurch gekennzeichnet, dass der Gleichspannungswandler (14) bei leitend gesteuertem Überbrückungsschalter (23) abgeschaltet ist.
